# EUROPÄISCHE PATENTSCHRIFT

(11) **EP 1 960 260 B1**
(45) Veröffentlichungstag und Bekanntmachung des Hinweises auf die Patenterteilung: **29.07.2015**
(21) Anmeldenummer: 06807136.4
(22) Anmeldetag: 11.10.2006
(51) Int. Cl.: B63H 21/20, B63H 3/00, H02J 3/38, H02J 9/04, H02J 3/00, B63H 23/24

(54) **HYBRID-ANTRIEBSSYSTEM FÜR EIN WASSERFAHRZEUG**
HYBRID PROPULSION SYSTEM FOR A WATERCRAFT
SYSTEME D'ENTRAINEMENT HYBRIDE POUR NAVIRE

(30) Priorität: 14.12.2005 DE 102005059761
(43) Veröffentlichungstag der Anmeldung: 27.08.2008
(73) Patentinhaber: Siemens Aktiengesellschaft, 80333 München (DE)
(72) Erfinder: BECK, Oliver, 2564 GN Den Haag (NL); VAN MOL, Wil, 37 Mt Sinai Rise SG/276956 (SG)
(86) Internationale Anmeldenummer: PCT/EP2006/067259
(87) Internationale Veröffentlichungsnummer: WO 2007/068514

(56) Entgegenhaltungen:
- EP-A1- 0 117 881
- DE-A1- 3 536 448
- JP-A- 7 132 885
- JP-A- 59 002 114
- JP-A- 59 166 000
- BUESCHEN R: "WGA - EIN MODERNES WELLENGENERATORSTYSTEM VON SIEMENS" HANSA, SCHIFFAHRTS-VERLAG HANSA SCHROEDTER, Bd. 120, Nr. 13, 1983, Seiten 1203-1207, XP008071929 HAMBURG, DE ISSN: 0017-7504 in der Anmeldung erwähnt
- "SINAMICS S150 75 kW BIS 1200 KW. Umrichter-Schrankgeraete" SIEMENS KATALOG, Bd. D 21.3, Mai 2004 (2004-05), Seiten 1-76, XP007901411 NUERNBERG, DE in der Anmeldung erwähnt

## Beschreibung

Die Erfindung bezieht sich auf ein Antriebssystem für ein Wasserfahrzeug gemäß Oberbegriff des Anspruchs 1. Ein Antriebssystem nach dem Oberbegriff des Anspruchs 1 ist z.B. schon bekannt aus JP 592114.

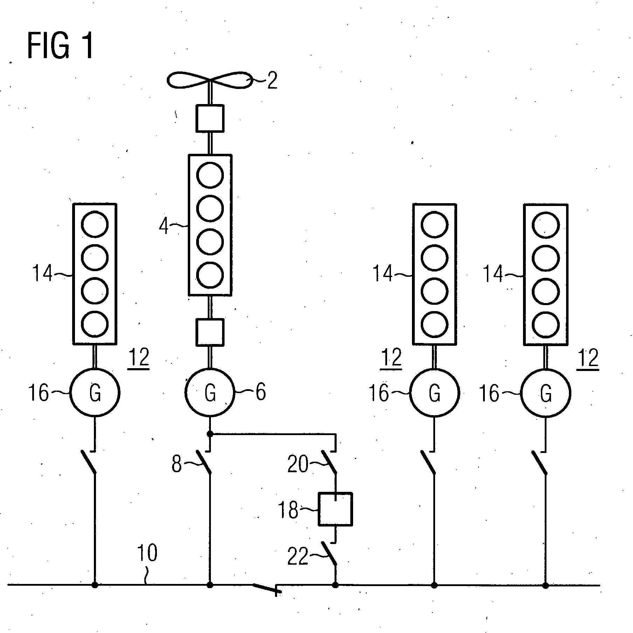

Bei einem einfachen Antriebssystem für Wasserfahrzeuge weist dieses Antriebssystem gemäß Fig. 1 nur einen Propeller 2 bzw. Schiffsschraube 2 auf, die über einen Dieselmotor 4, auch als Hauptdiesel bezeichnet, angetrieben wird. Dieser Dieselmotor 4 treibt nicht nur den Propeller 2 an, sondern ebenfalls einen Generator 6, der lastseitig mittels eines Schützes 8 mit einem Bordnetz 10 verbindbar ist. Zusätzlich weist dieses Antriebssystem wenigstens ein Hilfsgeneratoraggregat 12 auf. In dieser Fig. 1 sind drei Hilfsgeneratoraggregate 12. dargestellt, die jeweils aus einem Dieselmotor 14 und einem Stromgenerator 16 bestehen. Der Dieselmotor 14 eines jeden Hilfsgeneratoraggregates 12 wird auch als Hilfsdiesel bezeichnet. Die Stromgeneratoren 16 sind jeweils lastseitig mit dem Bordnetz 10 des Wasserfahrzeugs verknüpft. Damit ein Wasserfahrzeug mit einem derartigen Antrieb bei Ausfall des Hauptdiesels 4 auch sicher in einem Hafen einlaufen kann, weist dieses Antriebssystem zusätzlich einen Umrichter 18 auf, der einerseits zum Anfahren des Generators 6 und andererseits bei Ausfall des Hauptdiesels zum Betreiben des Generators 6 als Motor verwendet wird. Aus diesem Grund weist dieser Umrichter 18 generator- und bordnetzseitig jeweils ein Schütz 20 und 22 auf. Wird der Generator 6 aus dem Bordnetz 10 mittels des Umrichters 18 als Motor betrieben, so wird dieser Betriebszustand als Power Take In (PTI) bezeichnet. Ist dagegen der Generator 6 mit dem Bordnetz 10 elektrisch leitend verbunden, so wird dieser Betriebszustand als Power Take Off (PTO) bezeichnet.

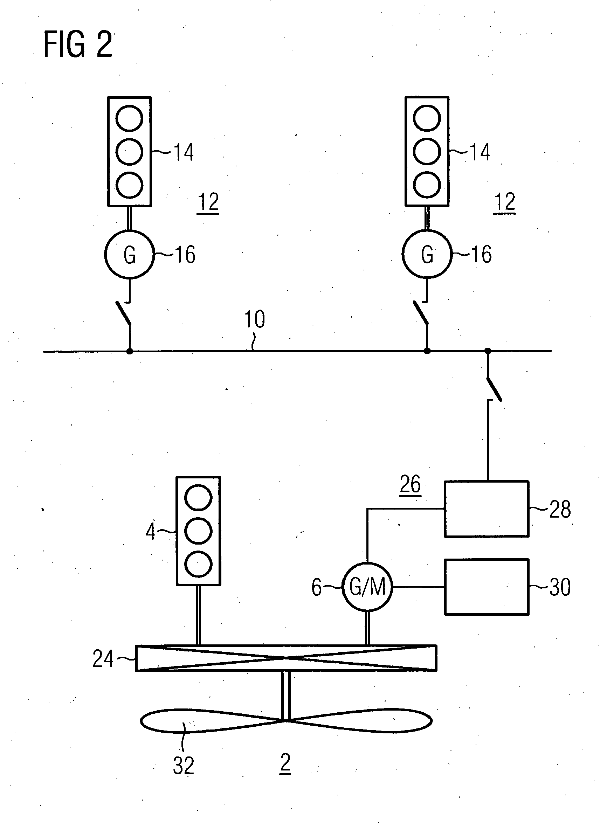

Aus der Veröffentlichung "WGA 23 - ein modernes Wellengerieratorsystem" von Rolf Büschen, abgedruckt in der DE-Zeitschrift "HANSA", 120. Jahrgang, Nummer 13, 1983, Heft Juli, Seiten 1203-1207, ist ein weiteres Antriebssystem für Wasserfahrzeuge bekannt und zur näheren Erläuterung in der Figur 2 schematisch dargestellt. Dieses bekannte Antriebssystem weist einen Dieselmotor 4, ein Getriebe 24, einen Propeller 2, wenigstens ein Dieselgeneratoraggregat 12 und ein Maschinensystem 26 auf. Der Dieselmotor 4 ist mittels des Getriebes 24 mit dem Propeller 2 des Wasserfahrzeugs verbunden. Außerdem ist das Maschinensystem 26 mittels des Getriebes 24 mit dem Propeller 2 verbunden.

Das Maschinensystem 26 weist in diesem bekannten Antriebssystem einen Generator 6, der in dieser Veröffentlichung als Wellengenerator bezeichnet wird, einen Stromzwischenkreis-Umrichter 28 und eine Erregereinrichtung 30 auf. Der Wellengenerator 6 ist ständerseitig mittels des Stromzwischenkreis-Umrichters 28 mit dem Bordnetz 10 elektrisch leitend verbindbar. Die Erregereinrichtung 30, die beispielsweise einen Erregerstromrichter mit Anpasstransformator aufweist, ist mit der Erregerwicklung des Wellengenerators 6 elektrisch leitend verbunden. Der Läufer dieses Wellengenerators 6 ist mit dem Getriebe 24 verbunden. Als Wellengenerator 6 ist eine fremderregte Synchronmaschine vorgesehen, die überwiegend als Generator betrieben wird.

Der Stromzwischenkreis-Umrichter 28, der generatorseitig einen Gleichrichter und bordnetzseitig einen'Wechselrichter aufweist, entkoppelt das Bordnetz 10 frequenzmäßig vom Wellengenerator 6. Der Gleichrichter und der Wechselrichter des Stromzwischenkreis-Umrichters 28 sind gleichstromseitig mittels eines Gleichstromzwischenkreises miteinander verbunden. Dieser Gleichstromzwischenkreis wird mittels einer Drossel gebildet, die erforderlich ist, um Umrichterströme im Störungs- und Kurzschlussfall begrenzen zu können. Dieser Gleichstromzwischenkreis-Umrichter 28 ist bordnetzseitig mit einer Netzdrossel zur Kurzschlussstrom- und Oberschwingungsbegrenzung versehen.

Da am Bordnetz 10 auch Verbraucher angeschlossen sind, die einen Blindstrom benötigen, weist das Maschinensystem 26 zusätzlich einen Blindleistungsgenerator mit angebautem Anwurfmotor auf, der aus Übersichtlichkeitsgründen nicht näher dargestellt ist.

In der oben genannten Veröffentlichung wird das skizzierte Maschinenmodell 26 als Wellengeneratorsystem bezeichnet. Mit dem Wellengenerator dieses Wellengeneratorsystems, der mittels des Getriebes 24 vom Hauptdiesel 4 angetrieben wird, wird auf einem Wasserfahrzeug preiswert elektrische Energie erzeugt.

Da sowohl der Gleichrichter als auch der Wechselrichter des Stromzwischenkreis-Umrichters 28 mit Thyristoren ausgerüstet ist, kann dieser Stromzwischenkreis-Umrichter 28 auch Leistung in umgekehrter Richtung, d.h. vom Bordnetz 10 zum Wellengenerator 6 übertragen. In diesem Fall arbeitet der Wellengenerator 6 als Motor und kann z.B. als Schiffsnotantrieb verwendet werden. Bei diesem Betrieb ist der Hauptdiesel 4 abgeschaltet. Die Energie zum Betrieb des Wellengenerators 6 als Motor liefern Dieselgeneratoraggregate 12, die jeweils einen Dieselmotor 14 und einen Stromgenerator 16 aufweisen.

Damit der Hauptdiesel 4 ökonomisch betrieben werden kann, wird dieser bei einer konstanten, beispielsweise Nenndrehzahl, betrieben. Damit die Geschwindigkeit des Wasserfahrzeugs gesteuert werden kann, weist der Propeller 2 Propellerblätter 32 auf, die in ihrer Steigung verstellbar sind.

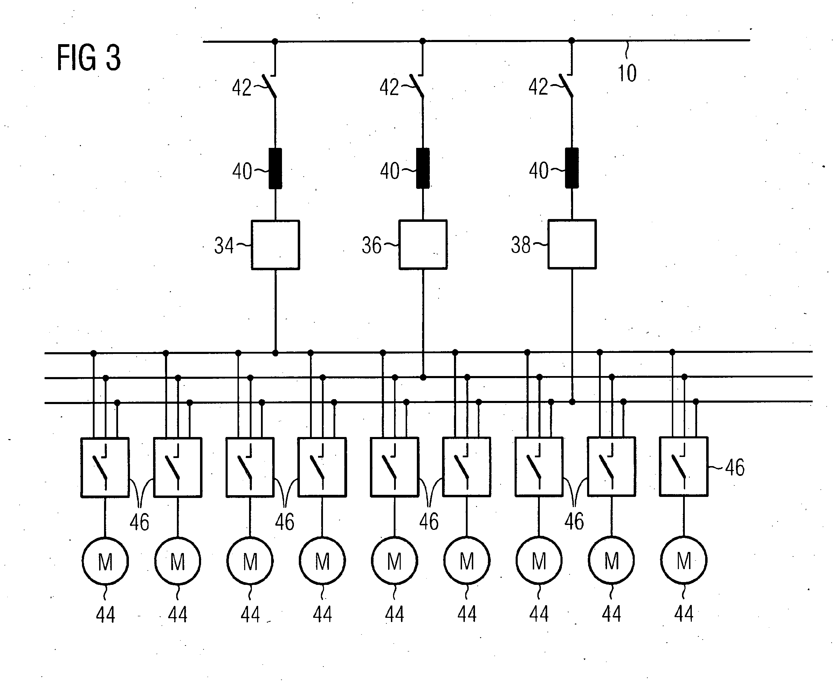

Neben diesem Antriebssystem weisen einige Wasserfahrzeuge noch wenigstens ein Arbeitsgerät, beispielsweise eine Pumpe, auf, das ebenfalls elektrisch betrieben wird. In der Fig. 3 ist eine Antriebseinheit für Be- und Entladepumpen dargestellt. Aus Übersichtlichkeitsgründen sind die Pumpen nicht explizit dargestellt. Zu dieser Antriebseinheit gehören gemäß dieser Darstellung drei Umrichter 34, 36 und 38, denen jeweils eine Drossel 40 bordnetzseitig vorgeschaltet sind. Diese Drosseln 40 sind jeweils mittels eines Schützes 42 mit dem Bordnetz 10 des Wasserfahrzeugs elektrisch leitend verbindbar. Lastseitig steht an jedem Umrichter 34, 36 und 38 ein Drehspannungsnetz variabler Spannung und variabler Frequenz zur Verfügung. Jeder Motor 44 einer Pumpe einer Be- und Entladepumpenanordnung kann mittels einer Schaltereinrichtung 46 mit einem dieser drei erzeugten Drehspannungsnetzen verbunden werden. Dadurch besteht die Möglichkeit, dass jedes Drehspannungsnetz unabhängig von den beiden anderen Drehspannungsnetzen auf eine vorbestimmte variable Spannung und Frequenz eingestellt werden kann. Dies ist dann von Vorteil, wenn die vorhandenen Be- und Entladepumpen unterschiedliche Betriebsspannungen und Drehzahlen aufweisen. Eine derartige Antriebseinheit wird nur dann benutzt, wenn das Wasserfahrzeug am Kai eines Hafens verankert ist und gelöscht bzw. beladen wird. Da die Verweilzeiten eines Wasserfahrzeugs im Hafen gegenüber den Verweilzeiten auf See zu vernachlässigen sind, ist die Wirtschaftlichkeit dieser Antriebseinheit bezogen auf das Wasserfahrzeug aus Sicht eines Reeders gering.

Der Erfindung liegt nun die Aufgabe zugrunde, das bekannte Antriebssystem für ein Wasserfahrzeug derart weiterzubilden, dass dieses einfacher wird.

Diese Aufgabe wird erfindungsgemäß mit dem kennzeichnenden Merkmal des Anspruchs 1 bzw. des Anspruchs 2 gelöst.

Dadurch, dass wenigstens einer der Umrichter der Antriebseinheit lastseitig mit dem Generator verbindbar ist, wird der bisherige Umrichter für den vom Hauptdiesel angetriebenen Generator eingespart. Da dieser Umrichter nur dann benutzt wird, wenn das Wasserfahrzeug nicht gelöscht bzw. beladen wird, kann die Funktion dieses Umrichters auch von wenigstens einem der Umrichter der Antriebseinheit übernommen werden. Durch diese Einsparung des Umrichters zum Hochfahren des Generators bzw. zum Betreiben des Generators als Motor im PTI-Betriebszustand wird Platz und Gewicht eingespart.

Bei einem Antriebssystem gemäß Anspruch 2, das auch als Wellengeneratorsystem bezeichnet wird, wird nicht nur der Umrichter dieser Wellengeneratoranlage, sondern auch der Anlasstransformator eingespart.

Somit werden mit einem erfindungsgemäß ausgebildeten Antriebssystem für ein Wasserfahrzeug neben Platz und Gewicht auch Investitionskosten eingespart.

Zur weiteren Erläuterung der Erfindung wird auf die Zeichnung Bezug genommen, in der Ausführungsformen des erfindungsgemäβen Antriebssystems für ein Wasserfahrzeug schematisch veranschaulicht sind.
- Fig. 1: zeigt ein bekanntes einfaches Antriebssystem eines Wasserfahrzeugs, in der
- Fig. 2: ist ein Ausschnitt aus einem bekannten Wellengeneratorsystem dargestellt, die
- Fig. 3: zeigt eine bekannte Antriebseinheit für Be- und Entladepumpen auf, in der
- Fig. 4: ist eine erste Ausführungsform eines Antriebssystems nach der Erfindung veranschaulicht, wogegen in der
- Fig. 5: eine zweite Ausführungsform eines erfindungsgemäßen Antriebssystems und in der
- Fig. 6: eine dritte Ausführungsform eines erfindungsgemäßen Antriebssystems dargestellt sind, die
- Fig. 7: zeigt eine universelle Antriebseinheit eines Antriebssystems nach der Erfindung, in der
- Fig. 8.: ist eine Tabelle für die Verschaltung mehrerer Umrichter der Antriebseinheit nach Fig. 7 und die
- Fig. 9: zeigt ein Prinzipschaltbild eines rückspeisefähigen Spannungszwischenkreis-Umrichters der Antriebseinheit nach Fig. 3 bzw. 7.

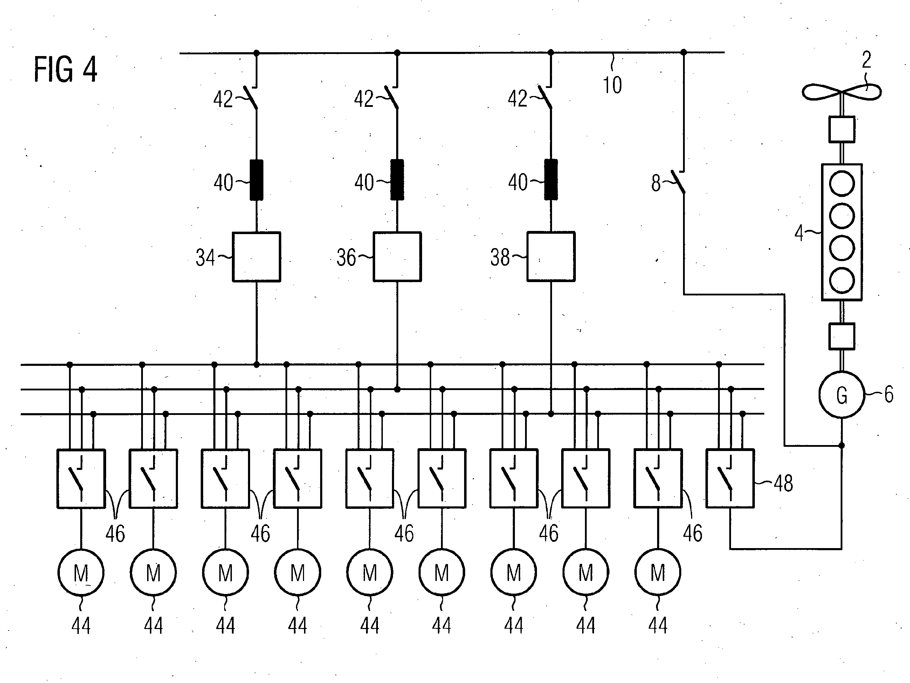

Die Fig. 4 zeigt eine erste Ausführungsform eines Antriebssystems für ein Wasserfahrzeug gemäß der Erfindung. Dieses erfindungsgemäße Antriebssystem ist dadurch gekennzeichnet, dass der Generator 6 der Fig. 1 mittels einer zusätzlichen Schaltereinrichtung 48 mit wenigstens einem der drei Drehspannungsnetze, die jeweils an einem Umrichter 34, 36 und 38 der Antriebseinheit für wenigstens ein Arbeitsgerät anstehen, verbindbar ist. Diese Schaltereinrichtung 48 ist genauso aufgebaut, wie die Schaltereinrichtungen 46 der bekannten Antriebseinheit für die Be- und Entladepumpen. Das heißt, mittels dieser Schaltereinrichtung 48 kann ein, zwei oder drei erzeugte Drehspannungsnetze parallel geschaltet werden. Wie viele dieser drei Umrichter 34, 36 und 38 und damit die generierten Drehspannungsnetze parallel geschaltet werden müssen, hängt von der zum Hochfahren des Generators 6 benötigten Energie ab. Nachdem der Generator 6 hochgefahren ist, wird das Schütz 8 geschlossen, wodurch der Generator 6 als Motor funktioniert (PTI). Die Schaltereinrichtung 48 wird wieder geöffnet, da im ungestörten Fall der bzw. die Umrichter 34, 36 und 38 nicht mehr für den Fahrbetrieb benötigt werden. Durch diese erfindungsgemäße Verschaltung der Antriebseinheit für die Be- und Entladepumpen mit der Antriebseinheit des Propellers 2 erhält man ein Antriebssystem für ein Wasserfahrzeug, das gegenüber einem bekannten Antriebssystem zumindest den Umrichter 18 der Fig. 1 einspart. Funktionell hat sich nichts geändert.

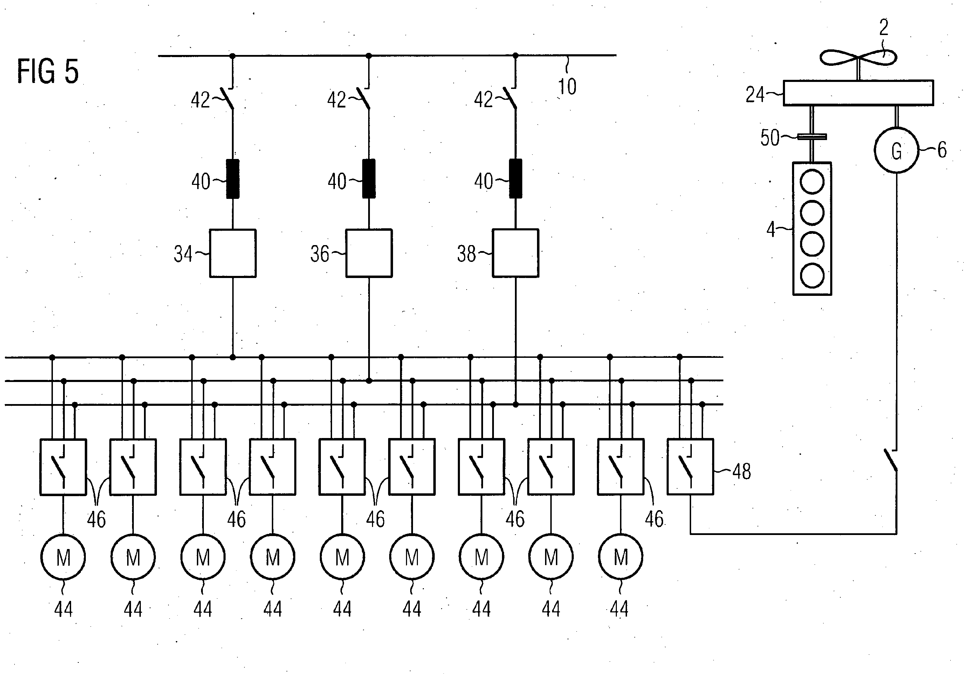

Die Ausführungsform des Antriebssystems nach Fig. 5 entsteht durch eine erfindungsgemäße Verschaltung der Antriebseinheit nach Fig. 3 mit der Antriebseinheit nach Fig. 2. Durch diese erfindungsgemäße Verschaltung wird der Stromzwischenkreis-Umrichter 28 der Fig. 2 eingespart. Gemäß der zweiten Ausführungsform des erfindungsgemäßen Antriebssystems ist der Generator 6 mittels wenigstens eines Umrichters 34, 36 oder 38 mit dem Bordnetz 10 elektrisch leitend verbindbar. Die Anzahl der zu verwendenden Umrichter 34, 36 oder 38 der Antriebseinheit für die Be- und Entladepumpen hängt von der elektrischen Leistung ab, die vom Generator 6 generiert wird. Durch die Schaltereinrichtung 48 kann der Generator 6 bordnetzseitig mit einem der drei Umrichter 34, 36 oder 38, mit zwei parallel geschalteten Umrichtern 34, 36 bzw. 36, 38 bzw. 38, 34 oder mit drei parallel geschalteten Umrichtern 34, 36 und 38 verbunden werden. Bei Ausfall des Hauptdiesels 4, der dann mittels einer Kupplung 50 von Getriebe 24 getrennt werden kann, bleibt die erfindungsgemäße Verknüpfung der beiden Antriebseinheiten erhalten, wobei die verwendeten Umrichter 34, 36 und 38 nun derart gesteuert werden, dann Energie vom Bordnetz 10 zum Generator 6 gelangen kann. Dadurch wird der Generator 6 motorisch betrieben, so dass ein Notbetrieb aufrechterhalten werden kann.

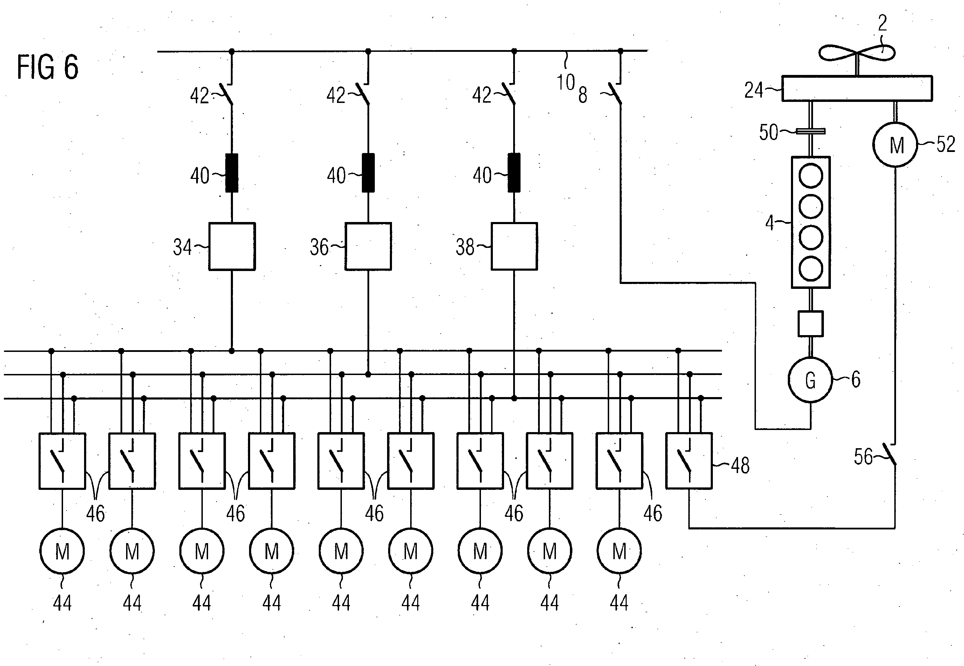

In der Fig. 6 ist eine dritte Ausführungsform des erfindungsgemäßen Antriebssystems näher dargestellt. Diese unterscheidet sich von der Ausführungsform gemäß Fig. 4 dadurch, dass zusätzlich ein Boostermotor 52 vorgesehen ist. Dieser zusätzliche Boostermotor 52 ist mittels des Getriebes 24 mit dem Propeller 2 des Wasserfahrzeugs verbunden. Bei einer derartigen Antriebseinheit für den Propeller 2 handelt es sich um einen so genannten Hybridantrieb. Die Energie für den Boostermotor 52 wird aus dem Bordnetz 10 zur Verfügung gestellt.

Nachdem der Generator 6 hochgelaufen ist, ist dieser bordnetzseitig direkt mit dem Bordnetz 10 elektrisch leitend verbunden. Der Boostermotor 52 ist mittels der Schaltereinrichtung 48 mit einer vorbestimmten Anzahl von Umrichtern 34, 36 oder 38 der Antriebseinheit für Be- und Entladepumpen verbunden. Mit Hilfe des oder der Umrichter 34, 36, 38 dieser Antriebseinheit kann die dem Boostermotor 52 zugeführte Energie gesteuert werden.

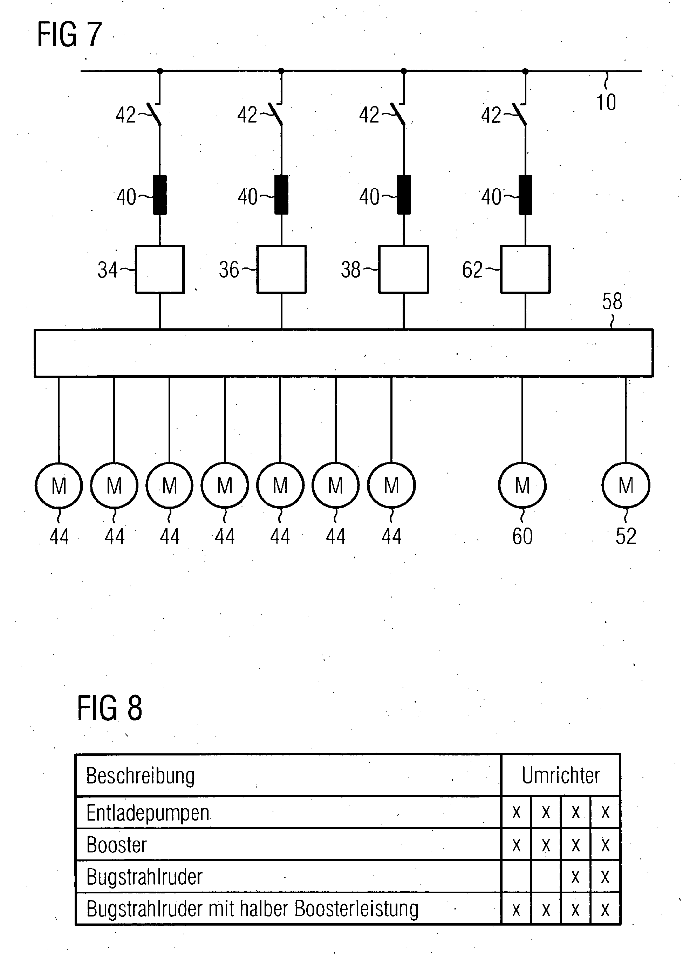

In der Fig. 7 ist eine universelle Antriebseinheit eines erfindungsgemäßen Antriebssystems dargestellt. Bei dieser Darstellung sind alle Schaltereinrichtungen 46 und zusätzliche Schaltereinrichtungen 48 gemäß der Fig. 4 bzw. 5 bzw. 6 in einer Matrixeinrichtung 58 zusammengefasst. Lastseitigsind eine Vielzahl von Elektromotoren 44, 52 und 60 angeschlossen. Mit 44 sind die Elektromotoren der Be- und Entladepumpen der Figuren 4, 5 oder 6, mit 52 ist der Boostermotor der Fig. 6 und mit 60 ist der Elektromotor eines Bugstrahlruders bezeichnet. Bordnetzseitig sind an den Anschlüssen der Matrixeinrichtung 58 in dieser Darstellung vier Umrichter 34, 36, 38 und 62 ausgangsseitig angeschlossen. Gemäß der Fig. 4, 5 oder 6 ist jeder Umrichter 34, 36, 38, 62 bordnetzseitig mittels einer Drossel 40 und einem Schütz 42 mit dem Bordnetz 10 des Wasserfahrzeugs elektrisch leitende verbindbar. Diese Antriebseinheit kann auch abweichend von der Fig. 4, 5, 6 oder dieser Darstellung nur zwei oder aber auch mehr als vier Umrichter 34, 36, 38 und 62 aufweisen.

In der Fig. 8 ist eine Tabelle dargestellt, aus der entnehmbar ist, wie viele dieser vier Umrichter 34, 36, 38 und 62 für die einzelnen Antriebsaufgaben benötigt werden. Beispielsweise werden zwei Umrichter, nämlich die Umrichter 38 und 62, für den Antrieb des Motors 60 des Bugstrahlruders benötigt. Wie viele von den installierten Umrichtern der Antriebseinheit des Antriebssystems für ein Wasserfahrzeug für einzelne Antriebsaufgaben verwendet werden müssen, hängt vorrangig von der geforderten Gesamtleistung und von den Leistungen der Umrichter ab.

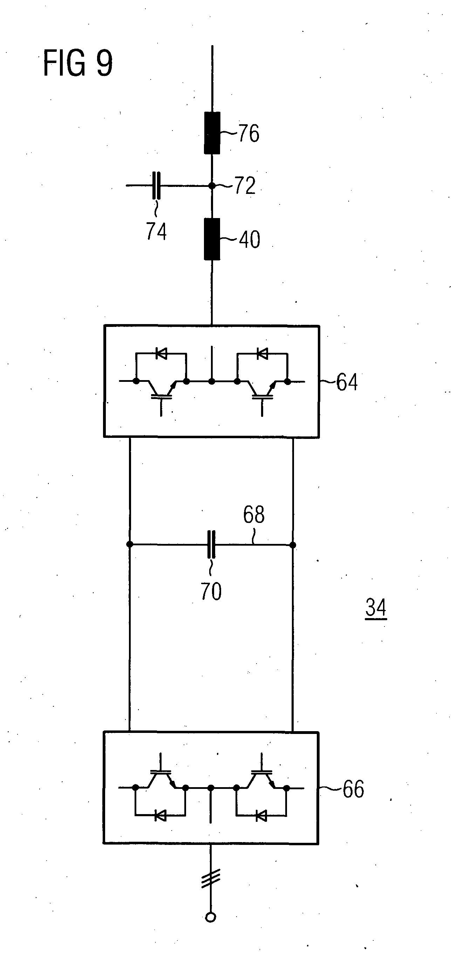

In der Fig. 9 ist ein Prinzipschaltbild eines rückspeisefähigen Spannungszwischenkreis-Umrichters 34 bzw. 36 bzw. 38 bzw. 62 näher dargestellt. Diese rückspeisefähigen Spannungszwischenkreis-Umrichter 34, 36, 38, 62 sind derart mit der Matrixeinrichtung 58 und dem Bordnetz 10 verknüpft, dass jeweils sein netzseitiger Stromrichter 64 mittels eines Schützes 42 mit dem Bordnetz 10 verbindbar sind und dass jeweils sein lastseitiger Stromrichter 66 mit Eingängen der Matrixeinrichtung 58 verbunden sind. Gemäß diesem Prinzipschaltbild sind der netzseitige Stromrichter 64 und der lastseitige Stromrichter 66 gleichspannungsseitig mittels eines Gleichspannungszwischenkreises 68, gebildet aus wenigstens einem Elektrolytkondensator 70, miteinander elektrisch leitend verbunden. Wechselspannungsseitig weist der netzseitige Stromrichter 64 ein Netzfilter 72 auf, das einen Filterkondensator 74 und zwei Filterdrosseln 40 und 76 aufweist. Der netzseitige Stromrichter 64 mit der eingangsseitigen Drossel 40 wird in der Stromrichtertechnik auch als Active Front End (AFE) bezeichnet. Gemäß diesem Prinzipschaltbild des rückspeisefähigen Spannungszwischenkreis-Umrichters 34 bzw. 36 bzw. 38 bzw. 62 sind als Stromrichterventile des netzseitigen Stromrichters 64 und des lastseitigen Stromrichters 66 jeweils Insulated-Gate-Bipolar-Transistoren, so genannte IGBTs, vorgesehen. Es können natürlich auch jeder andere abschaltbare Halbleiterschalter jeweils als Stromrichterventil dieser beiden Stromrichter 64 und 66 verwendet werden. Ein selbstgeführter, gepulster Ein-/Rückspeisestromrichter in IGBT-Technik im Zusammenhang mit dem Filter weist eine vernachlässigbare Netzrückwirkung auf und ermöglicht eine Blindleistungskompensation. Ein Umrichtergerät mit diesem Prinzipschaltbild ist im Handel als Umrichter-Schaltschrank (Siemens-Katalog D21.3, Mai 2004, mit dem Titel "SINAMICS S150 -Umrichter-Schaltschränke 75kW bis 1200kW") erhältlich.

Bei diesem erfindungsgemäßen Antriebssystem für ein Wasserfahrzeug, bestehend aus einer Antriebseinheit für den Propeller 2 und eine Antriebseinheit für Arbeitsgeräte, werden diese beiden Antriebseinheiten miteinander verknüpft. Dadurch wird die Antriebseinheit für die Arbeitsgeräte für weitere Antriebsaufgaben verwendet. Dadurch wird bei der Antriebseinheit für den Propeller 2 zumindest eine Umrichtereinheit eingespart. Mit dieser Einsparung verringert sich der Platzbedarf und das Gewicht des erfindungsgemäßen Antriebssystems. Außerdem wird die installierte Antriebsleistung über eine viel längere Betriebszeit verwendet, so dass sich die WirtSchaftlichkeit dieses Antriebssystems wesentlich erhöht.

## Patentansprüche

1. Antriebssystem für ein Wasserfahrzeug mit einem Dieselmotor (4), einem Propeller (2), wenigstens einem Hilfsgeneratoraggregat (12), einem Generator (6) und einer Antriebseinheit für wenigstens ein Arbeitsgerät, wobei der Dieselmotor (4) einerseits mit dem Propeller (2) und andererseits mittels des Generators (6) mit einem Bordnetz (10) des Wasserfahrzeugs verbindbar ist, und wobei die Antriebseinheit für Arbeitsgeräte wenigstens einen Umrichter (34, 36, 38, 62) aufweist, die einerseits mit dem Bordnetz (10) und andererseits mit den Arbeitsgeräten verbindbar sind, **dadurch gekennzeichnet, dass** wenigstens einer dieser Umrichter (34, 36, 38, 62) der Antriebseinheit für Arbeitsgeräte lastseitig mittels einer Schaltereinrichtung (48) mit dem Generator (6) verbunden ist.

2. Antriebssystem nach Anspruch 1, **dadurch gekennzeichnet, dass** der Generator (6) und der Dieselmotor (4) mittels eines Getriebes (24) mit dem Propeller (2) verknüpft sind.

3. Antriebssystem nach einem der vorgenannten Ansprüche, **dadurch gekennzeichnet, dass** die Arbeitsgeräte und der Generator (6) mittels einer Matrixeinrichtung (58) mit den lastseitigen Anschlüssen der Umrichter (34, 36, 38, 62) der Antriebseinheit für Arbeitsgeräte verbindbar sind.

4. Antriebssystem nach einem der vorgenannten Ansprüche, **dadurch gekennzeichnet, dass** jeder Umrichter (34, 36, 38, 62) der Antriebseinheit für Arbeitsgeräte ein Spannungszwischenkreis-Umrichter ist.

5. Antriebssystem nach Anspruch 4, **dadurch gekennzeichnet, dass** der Spannungszwischenkreis-Umrichter rückspeisefähig ausgebildet ist.

6. Antriebssystem nach einem der vorgenannten Ansprüche, **dadurch gekennzeichnet, dass** das Hilfsgeneratoraggregat (12) einen Dieselmotor (14) und einen Stromgenerator (16) aufweist.

7. Antriebssystem nach einem der vorgenannten Ansprüche, **dadurch gekennzeichnet, dass** das Arbeitsgerät eine Pumpe ist.

8. Antriebssystem nach einem der Ansprüche 1 bis 6, **dadurch gekennzeichnet, dass** das Arbeitsgerät ein Bugstrahlruder ist.

## Claims

1. Propulsion system for a watercraft having a diesel engine (4), a propeller (2), at least one auxiliary generator set (12), a generator (6) and a drive unit for at least one appliance, wherein the diesel engine (4) can be connected on the one hand to the propeller (2) and on the other hand by means of the generator (6) to an on-board power supply system (10) in the watercraft, and wherein the drive unit for appliances has at least one converter (34, 36, 38, 62) which can be connected on the one hand to the on-board power supply system (10) and on the other hand to the appliances, **characterized in that** at least one of these converters (34, 36, 38, 62) of the drive unit for appliances is connected to the generator (6) on the load side by means of a switch device (48).

2. Propulsion system according to Claim 1, **characterized in that** the generator (6) and the diesel engine (4) can be linked to the propeller (2) by means of a gearbox (24).

3. Propulsion system according to either of the abovementioned claims, **characterized in that** the appliances and the generator (6) can be connected by means of a matrix device (58) to the load-side connections of the converters (34, 36, 38, 62) for the drive unit for appliances.

4. Propulsion system according to one of the above-mentioned claims, **characterized in that** each converter (34, 36, 38, 62) for the drive unit for appliances is a voltage intermediate-circuit converter.

5. Propulsion system according to Claim 4, **characterized in that** the voltage intermediate-circuit converter is designed to have a feedback capability.

6. Propulsion system according to one of the above-mentioned claims, **characterized in that** the auxiliary generator set (12) has a diesel engine (14) and an electrical generator (16).

7. Propulsion system according to one of the above-mentioned claims, **characterized in that** the appliance is a pump.

8. Propulsion system according to one of Claims 1 to 6, **characterized in that** the appliance is a bow steering thruster.

## Revendications

1. Système de propulsion d'un bâtiment de navigation ayant un moteur (4) diesel, une hélice (2), au moins un groupe ( 12 ) de génératrice auxiliaire, une génératrice ( 6 ) et un groupe d'entraînement d'au moins un appareil fournissant du travail, le moteur (4) diesel pouvant être relié, d'une part, à l'hélice (2) et, d'autre part, à l'aide de la génératrice ( 6 ), à un réseau ( 10 ) de bord du bâtiment de navigation et le groupe d'entraînement des appareils fournissant du travail ayant au moins un convertisseur ( 34, 36, 38, 62 ), qui, d'une part, peut être relié au réseau ( 10 ) de bord et, d'autre part, aux appareils fournissant du travail, **caractérisé en ce qu'**au moins l'un de ces convertisseurs ( 34, 36, 38, 62 ) du groupe d'entraînement d'appareils fournissant du travail est relié du côté de la charge à la génératrice ( 6 ) au moyen d'un dispositif ( 48 ) de commutation.

2. Système de propulsion suivant la revendication 1, **caractérisé en ce que** la génératrice ( 6 ) et le moteur ( 4 ) diesel sont combinés à l'hélice ( 2 ) au moyen d'une transmission ( 24 ).

3. Système de propulsion suivant l'une des revendications précédentes, **caractérisé en ce que** les appareils fournissant du travail et la génératrice ( 6 ) peuvent, au moyen d'un dispositif ( 58 ) matriciel, être reliés aux bornes du côté de la charge du convertisseur ( 34, 36, 38, 62 ) du groupe d'entraînement des appareils fournissant du travail.

4. Système de propulsion suivant l'une des revendications précédentes, **caractérisé en ce que** chaque convertisseur ( 34, 36, 38, 62 ) du groupe d'entraînement des appareils fournissant du travail est un convertisseur de circuit intermédiaire de tension.

5. Système de propulsion suivant la revendication 4, **caractérisé en ce que** le convertisseur de circuit intermédiaire de tension est constitué de manière à pouvoir être alimenté en retour.

6. Système de propulsion suivant l'une des revendications précédentes, **caractérisé en ce que** le groupe ( 12 ) de génératrice auxiliaire a un moteur ( 14 ) diesel et une génératrice ( 16 ) de courant.

7. Système de propulsion suivant l'une des revendications précédentes, **caractérisé en ce que** l'appareil fournissant du travail est une pompe.

8. Système de propulsion suivant l'une des revendications 1 à 6, **caractérisé en ce que** l'appareil fournissant du travail est un gouvernail transversal d'étrave.
